# EUROPEAN PATENT APPLICATION

(11) **EP 1 286 407 A2**
(43) Date of publication of application: **26.02.2003**
(21) Application number: 02014824.3
(22) Date of filing: 03.07.2002
(51) Int. Cl.: H01M 8/06

(54) **Enhanced heat conductive device for supply device of hydrogen source, and supply device of hydrogen source having same**

(30) Priority: 23.08.2001 CN 01124275
(71) Applicant: Asia Pacific Fuel Cell Technologies, Ltd., Neihu, Taipei 114 (TW)
(72) Inventor: Ys Yang, Jefferson, Asia Pacific Fuel Cell Tec.Ltd, Neihu, Taipei 114 (TW)
(74) Representative: Goddar, Heinz J., Dr.

(57) **Abstract**

This invention is related to an enhanced heat conductive device for supply device of hydrogen source of a fuel cell. The supply device comprises: at least one pressurized bottle (22) filled with metal hydride and having an outer diameter. The enhanced heat conductive device comprises: a metal shell (12) configured to an elongated, cylindrical column (16) having an inner diameter, and at least one expandable rib, longitudinally extended along a length direction of and integrally formed with the metal shell (12). The outer diameter of the pressurized bottle (22) is slightly greater than the inner diameter of the metal shell (12), such that when the pressurized bottle (22) is inserted through the metal shell (12), the pressurized bottle will force expansion of the rib resulting in close contact between the metal shell and the pressurized bottle. This invention further discloses supply device of hydrogen source having such an enhanced heat conductive device.

## Description

### Background of the Invention

### Field of the Invention

This invention is related to a supply device of hydrogen source of a fuel cell, particularly to one having an enhanced heat conductive device.

### Description of the Related Art

With the rapid advancement of civilization, the consumption of traditional energy resources, such as coal, oil and natural gas, increases rapidly. This results in serious pollution to the global environment and causes various environmental problems such as global warming and acid rain. It is now recognized that the existing natural energy resources are limited. Therefore, if the present rate of energy consumption continues, all existing natural energy resources will be exhausted in the near future. Accordingly, many developed countries are dedicated to research and development of new and alternative energy resources. The fuel cell is one of the most important and reasonably priced energy resources. Compared with traditional internal combustion engines, the fuel cell has many advantages such as high energy conversion efficiency, clean exhaust, low noise, and no consumption of traditional gasoline.

In brief, a fuel cell is an electrical power generation device powered by the electro-chemical reaction of hydrogen and oxygen. Basically, the reaction is a reverse reaction of the electrolysis of water, to convert the chemical energy into electrical energy. The basic structure of a fuel cell, for example, a proton exchange membrane fuel cell, comprises a plurality of cell units. Each cell unit contains a proton exchange membrane (PEM) at the middle, with the two sides thereof provided with a layer of catalyst, each of the two outsides of the catalyst is further provided with a gas diffusion layer (GDL). An anode plate and a cathode plate are further provided at the outermost sides adjacent to the GDL. After combining all the above elements together, a cell unit is formed.

For the practical application of a fuel cell, in order to generate a sufficient amount of electricity, oxygen and hydrogen must be supplied to the fuel cell continuously to continue the electrochemical reaction. Oxygen can usually be acquired from the atmospheric air while a special supply device must be used to supply hydrogen to the fuel cell.

One of the known measures of storing hydrogen is to store pressurized, low temperature hydrogen within a pressurized hydrogen bottle, in which hydrogen is then recovered to the required operative conditions prior to releasing.

Another known measure of storing hydrogen is to use the so-called metal hydride. Metal hydride is able to discharge hydrogen at a pressure corresponding to the temperature it experiences; the process of releasing hydrogen is an endothermic reaction. When the hydrogen stored in the metal hydride has been completely exhausted, pure hydrogen can be re-charged back into the metal hydride; the process of charging hydrogen is an exothermic reaction. The temperature which metal hydride experiences is positively proportional to the pressure of the hydrogen to be discharged from the metal hydride, such a proportional relationship may vary in the metal hydrides furnished by different suppliers.

Since the metal hydride discharges hydrogen only upon absorbing sufficient heat energy, uneven heat transfer may thus result in insufficient discharge of hydrogen stored in the metal hydride.

Due to the highly combustive characteristic of hydrogen, an easy and convenient method for pre-storing hydrogen in a specific container, as well as for releasing hydrogen as required for performing the above electrochemical reaction, is needed.

### Brief Summary of the Invention

It is a primary objective of this invention to provide a supply device in use with a fuel cell, having an enhanced heat conductive device, allowing close contact between the hydrogen source and the enhanced heat conductive device, so as to enhance heat transfer rate from a heat source to the hydrogen source for sufficiently heating the hydrogen source to allow thorough endothermic reaction of the metal hydride in the hydrogen source, so as to effectively discharge the hydrogen at a fixed pressure.

The major technical content of this invention is to implement a metal shell configured to an elongated, cylindrical column having an inner diameter, and at least one expandable rib, longitudinally extended along a length direction of and integrally formed with the metal shell. The outer diameter of the pressurized bottle is slightly greater than the inner diameter of the metal shell, such that when the pressurized bottle is inserted through the metal shell, the pressurized bottle forces expansion of the rib resulting in close contact between the metal shell and the pressurized bottle so as to ensure that the metal hydride can smoothly discharge the hydrogen stored therein while being heated under an evenly heated state. This invention further discloses a supply device of hydrogen source having such an enhanced heat conductive device.

The structures and characteristics of this invention can be realized by referring to the appended drawings and explanations of the preferred embodiments.

### Brief Description of the Several Views of the Drawings

Fig. 1a is a perspective view of the enhanced heat conductive device of this invention;
Fig. 1b is a perspective view showing the enhanced heat conductive device upon expansion;
Fig. 2a is an end view showing the enhanced heat conductive device of Fig. 1a;
Fig. 2b is an end view showing the enhanced heat conductive device of Fig. 1b;
Fig. 3a illustrates a schematic, cross-sectional view showing a hydrogen source supply device using the enhanced heat conductive device of this invention;
Fig. 3b is a perspective view illustrating the appearance of the hydrogen source supply device of this invention;
Fig. 4 illustrates a cross-sectional view of a quick connection;
Fig. 5 illustrates an exploded, perspective view of the quick connection;
Fig. 6a is a cross-sectional, schematic view, showing the state when the pressurized bottle is disconnected from the quick connection; and

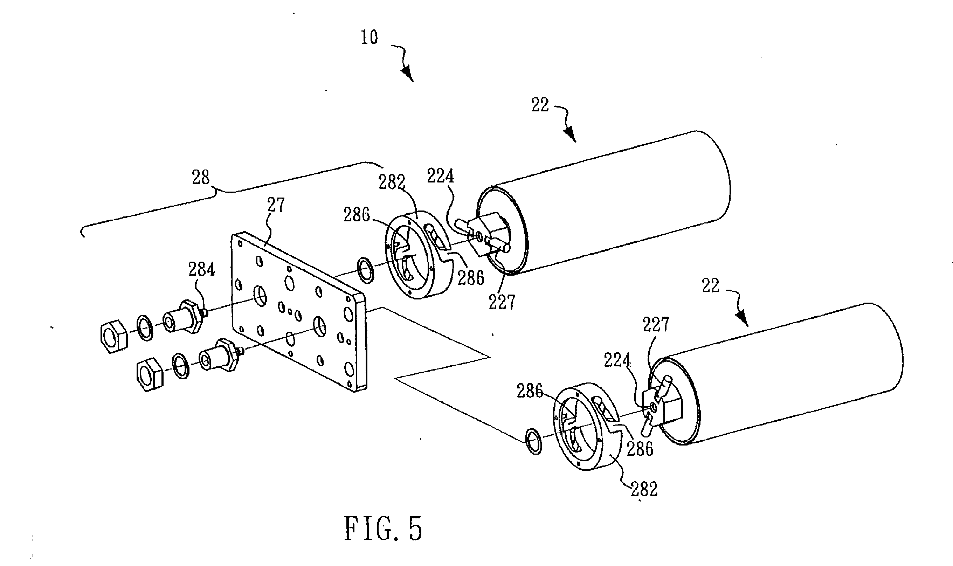

Fig. 5b is a cross-sectional, schematic view, showing the state when the pressurized bottle is connected to the quick connection.

### Detailed Description of the Invention

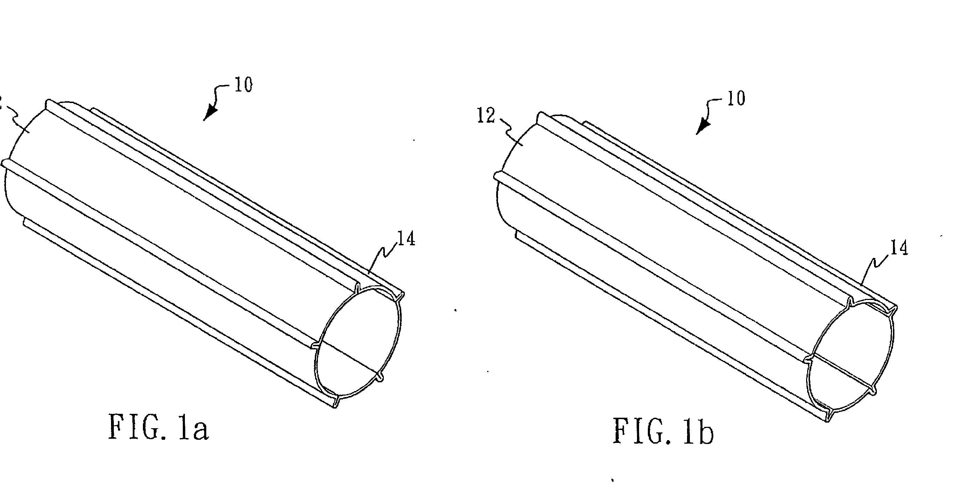

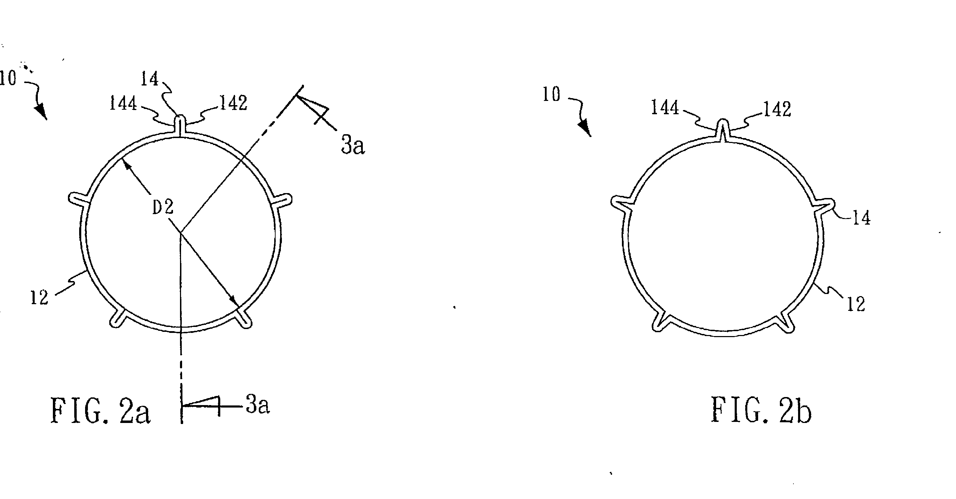

Fig. 1a is a perspective view of the enhanced heat conductive device 10 of this invention; Fig. 2a is an end view showing the enhanced heat conductive device 10. The enhanced conductive device 10 comprises: an elongated, cylindrical shell 12; a plurality of expandable ribs 14, longitudinally extended along a length direction of and integrally formed with the metal shell 12 having a center. As illustrated in Fig. 1a, each rib 14 protrudes from an outer surface of the metal shell 12 in a radial direction away from the center, and includes a pair of symmetrical rib surfaces 142, 144.

Figs. 1b and 2b are perspective views showing the paired rib surfaces 142, 144 of each rib 14 being forced to be separated and expanded while the inner diameter of the enhanced heat conductive device experiences an external force. The enhanced heat conductive device 10 prefers to be made of copper or stainless steel; the device 10 may alternatively be made of other metallic materials or composite materials having stretchability and heat conductivity.

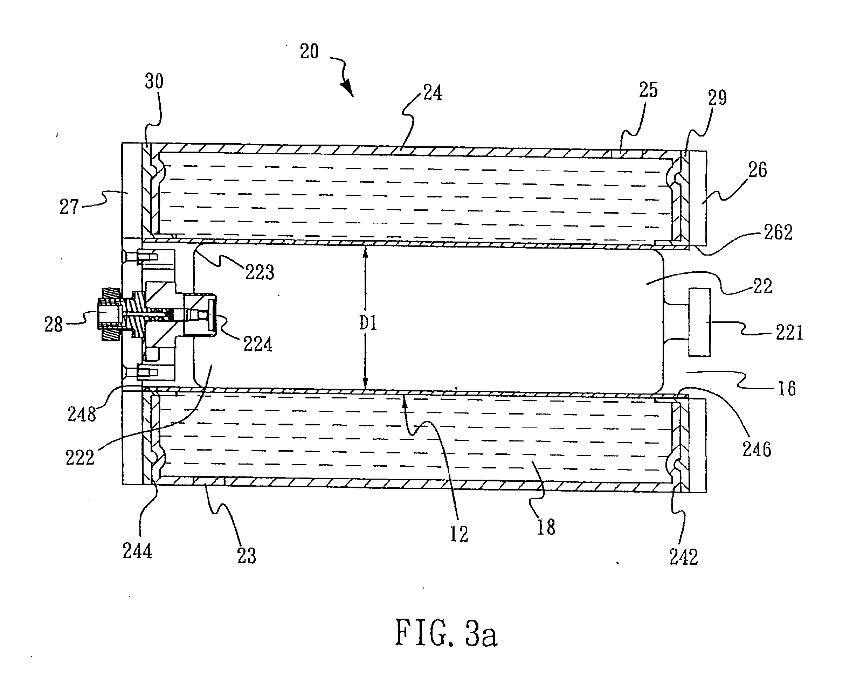

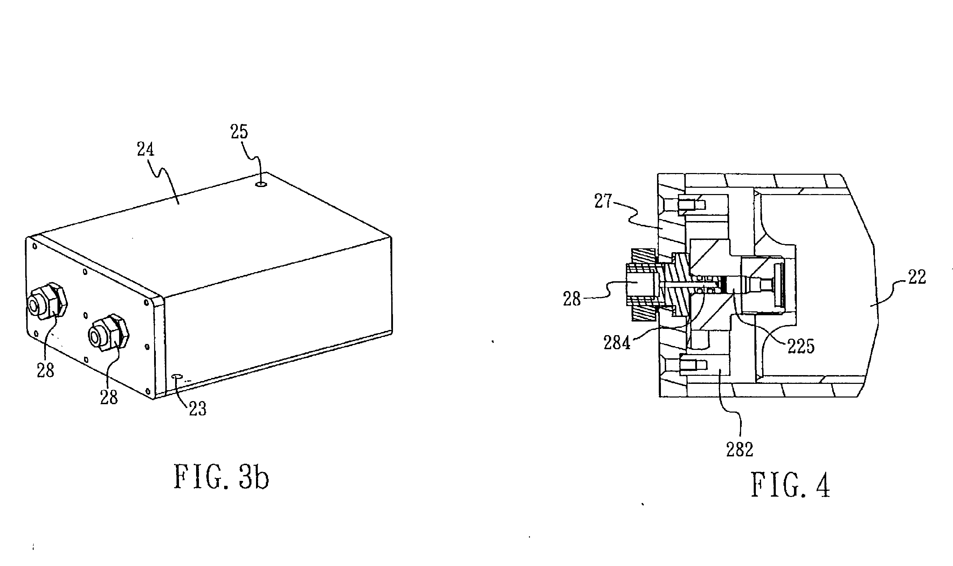

Fig. 3a illustrates a schematic, cross-sectional view showing a hydrogen source supply device 20 using the enhanced heat conductive device 10; Fig. 3b is a perspective view illustrating the appearance of the hydrogen source supply device 20. As illustrated in Figs. 3a and 3b, the hydrogen source supply device 10 comprises: a pressurized bottle 22 filled with metal hydride, an outer casing 24, a top plate 26, an expandable metal shell 12, bottom plate 27, a quick connection 28, a first seal 29, and a second seal 30.

The pressurized bottle 22 has an outer diameter D1, a bottom end 221, a port end 222, and a gas discharge valve device 224 provided at the port end 222. The outer casing 24 defines a receiving chamber and having a first end 242 and a second end 244 opposing the first end 242. The first end 242 and the second end 244 are each formed with first round opening 246 and a second round opening 248 substantially congruent to one another.

The top plate 26 is affixed to the first end 42 of the outer casing 24, and is formed with a third round opening 262 substantially congruent to the first round opening 246 at a location corresponding to where the first round opening 246 is formed.

The metal shell 12 has an inner diameter D2 (see Fig. 2a). The inner diameter D2 is slightly smaller than the outer diameter D1 of the pressurized bottle 22. The metal shell 12 passes through the first, second, and third round openings 246, 248, 262 for partitioning the receiving chamber into an inner compartment 16 inside the metal shell 12 and an outer compartment 18 outside the metal shell 12. The inner compartment 16 and the outer compartment 18 are intended for receiving the pressurized bottle 22 and hot water, respectively.

The bottom plate 27 is affixed to the second end 244 of the outer casing 24. The quick connection 28 is provided on the bottom plate 27 for connecting with the gas discharge valve device 224 of the pressurized bottle 22 received in the inner compartment 16, so as to activate the gas discharge valve 224.

The first seal 29 is provided among the top plate 26, the first end 242 of the outer casing 24, and the metal shell 12; the second seal 30 is among the bottom plate 27, the second end 244 of the outer casing 24, and the metal shell 12, so as to prevent leakage of the hot water within the outer compartment 18.

While using the hydrogen source supply device 20, because the outer diameter D1 of the pressurized bottle 22 is slightly greater than the inner diameter D2 of the metal shell 12, inserting the pressurized bottle 22 through the inner compartment 16 will force expansion of the metal shell 12 such that the metal shell 12 is in close contact with the pressurized bottle 22.

To facilitate insertion of the pressurized bottle 22 having a greater diameter into the metal shell 22, the port end 222 of the pressurized bottle 22 may be formed with a converging outer diameter.

Fig. 4 illustrates a cross-sectional view of a quick connection; Fig. 5 illustrates an exploded, perspective view of the quick connection. The quick connection 28 includes: a retaining ring 282 affixed to the bottom plate 27 122, and an urge pin 284 perpendicularly projecting from the bottom 27 at the center of the retaining ring 282 towards the inner compartment 16. The retaining ring 282 is formed thereon with a slit 286 inclining towards the bottom plate 27 The slit 286 is to accommodate a locking device 277 (such as rods illustrated in the drawings) provided at the port end of the pressurized bottle 22. As such, when the pressurized bottle 22 is placed into the inner compartment 16, and the pressurized bottle 22 is rotated towards the bottom plate 27 by subjecting the locking device 227 of the pressurized bottle 22 to move along the slit 286, so as to be locked to the retaining ring 282, the urge pin 284 is inserted into the gas discharge valve device 224 to activate the gas discharge valve device 224 to discharge gas, as illustrated in Fig. 4.

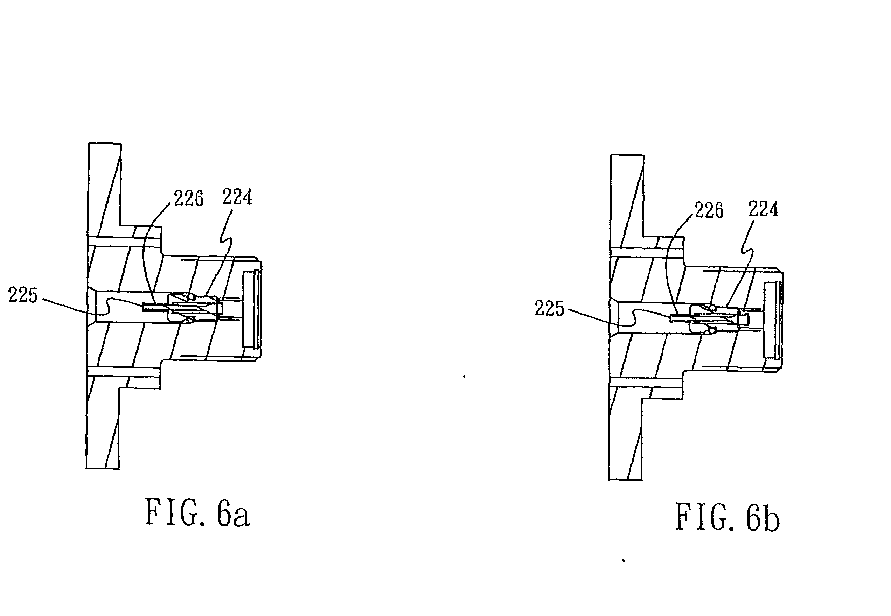

The operations of how the urge pin 284 of the quick connection 28 actuates the pressurized bottle 22 are best illustrated in Figs. 6a and 6b. As illustrated in Fig. 6a, when the pressurized bottle 22 is yet to be connected to the retaining ring 282 of the quick connection 28, a compression spring 226 located around a valve device pin 225 of the valve device 224 is maintained at its expanded state by the gas pressure within the bottle 22, enabling the valve device 224 to its off state and preventing the valve device 224 from leaking gas. When the pressurized bottle 22 is placed into the inner compartment 16 and locked to the retaining ring 282 of the quick connection 28, the valve device pin 225 is compressed by the urge pin 284 of the quick connection 28 to repulse resilience of the compression spring 226, enabling the valve device pin 225 to retract backwards, as illustrated in Fig. 6b, thereby activating the gas discharge valve device 224 to discharge the gas within the pressurized bottle 22 at a specific pressure.

After the pressurized bottle 22 is placed in the inner compartment 16, the hot water in the outer compartment 18 will surround the inner compartment 16 for heating the pressurized bottle 22, so as to enable endothermic reaction of the metal hydride in the pressurized bottle 22 for releasing hydrogen from the gas discharge valve device 224 at a constant pressure.

The hot water enters the outer compartment 18 through a water inport 23 connected to a water tank (not shown) located at a bottom of the outer casing 24, and then exits the outer compartment 18 through a water outport 25 located at a top of the outer compartment 18, subjecting the hot water to flow around the outer compartment 18, whereby the heat energy of the hot water is effectively conducted to the pressurized bottle.

As stated previously, the process of releasing hydrogen from metal hydride is an endothermic reaction. Hence, the heat energy of the hot water properly serves the purpose required for the endothermic reaction, such that the metal hydride in the pressurized bottle 50 may discharge hydrogen at a selected temperature and at a corresponding pressure.

Since the supply device for use with a hydrogen source utilizes circulated hot water as the heat source, the supply device is able to continuously heat the metal hydride in the pressurized bottle for discharging hydrogen. Further, because the hot water and the pressurized bottle in this invention are only separated by an enhanced heat conductive device, and because the pressurized bottle is in close contact with the enhanced heat conductive device, the heat conductivity between the heat source and the hydrogen source is effectively improved.

Under actual operations, it is found that fuel cells are most effective when the hydrogen is supplied at a pressure range of 50 to 300 psi. Therefore, one may implement an electronic control circuit, temperature sensors, or other conventional means to control the heating device, so as to maintain the pressurized bottle under a temperature that corresponds to the preferred pressure range, in accordance with the specific characteristics of the metal hydride filled in the pressurized bottle. When the hydrogen stored in the metal hydride is completely exhausted, the pressurized bottle 220 can be rapidly removed from the inner compartment 16; pure hydrogen can be re-charged back into the metal hydride, which may then again serve as a safe and light hydrogen source.

This invention is related to a novel creation that makes a breakthrough to conventional art. Aforementioned explanations, however, are directed to the description of preferred embodiments according to this invention. Various changes and implementations can be made by those skilled in the art without departing from the technical concept of this invention. Since this invention is not limited to the specific details described in connection with the preferred embodiments, changes to certain features of the preferred embodiments without altering the overall basic function of the invention are contemplated within the scope of the appended claims.

### Sequence Listing

- D1: outer diameter
- D2: inner diameter
- 10: enhanced heat conductive device
- 12: metal shell
- 14: expandable ribs
- 20: hydrogen source supply device
- 22: pressurized hydrogen bottle
- 23: Inport
- 24: outer casing
- 25: Outport
- 26: top plate
- 27: bottom plate
- 28: quick connection
- 29: first seal
- 30: second seal
- 142, 144: rib surfaces
- 221: bottom end
- 222: port end
- 224: gas discharge valve device
- 225: urge pin
- 226: compression spring
- 227: locking device
- 242: first end
- 244: second end
- 246: first round opening
- 248: second round opening
- 262: third round opening
- 282: retaining ring
- 284: valve device pin
- 286: Slit

## Claims

1. A supply device for use with a hydrogen source, comprising:
at least one pressurized bottle filled with metal hydride and having an outer diameter, including:
a bottom end;
a port end;
a gas discharge valve device provided at the port end;
an outer casing, defining a receiving chamber, and having a first end and a second end opposing the first end;
an expandable metal shell having a center and being configured to a columnar configuration, the expandable shell passing through the outer casing for partitioning the receiving chamber into an inner compartment for receiving the pressurized bottle inside the metal shell and an outer compartment outside the metal shell, wherein the metal shell having an inner diameter that is slightly smaller than the outer diameter of the pressurized bottle;
at least one quick connection, provided on the outer casing, to connect to the gas discharge valve device of the pressurized bottle received in the inner compartment for activating the gas discharge valve device to an open position;
a first seal, provided between the first end of the outer casing and the expandable metal shell; and
a second seal, provided between the second end and the expandable metal shell;
whereby when the pressurized bottle is inserted through the inner compartment, the pressurized bottle forces the metal shell to expand such that the metal shell is in close contact with the pressurized bottle.

2. A supply device according to Claim 1, further comprising:
a top plate, secured to the first end of the outer casing: and
a bottom plate, secured to the second end of the outer casing;
wherein
the at least one quick connection is provided on the bottom plate, the first seal is provided among the top plate, the first end of the outer casing, and the expandable metal shell, and the second seal is provided among the bottom plate, the second end of the outer casing, and the expandable metal shell.

3. The supply device according to Claim 1, wherein:
the first end and the second end of the outer casing are formed, respectively, thereon with a first round opening and a second round opening congruent to each other;
the top plate is formed thereon with a third round opening substantially congruent to the first round opening at a location corresponding to where the first round opening is formed; and
the expandable metal shell passes through the first, the second, and the third round openings.

4. The supply device according to Claim 1, wherein the expandable metal shell further comprising: at least one expandable rib, longitudinally extending along and integrally formed with the metal shell.

5. The supply device according to Claim 4, wherein the at least one expandable rib protrudes from the metal shell in a radial direction away from the center, and includes a pair of symmetrical rib surfaces.

6. The supply device according to Claim 4, wherein the expandable metal shell is made of copper.

7. The supply device according to Claim 4, wherein the expandable metal shell is made of stainless steel.

8. The supply device according to Claim 1, wherein the at least one quick connection includes:
a retaining ring, affixed to the bottom plate and having a center;
a locking device, removable connecting to the retaining ring and the port end of the at least one pressurized bottle;
an urge pin, projecting from the bottom plate at the center of the retaining ring towards the inner compartment;
whereby, when the at least one pressurized bottle is placed into the inner compartment and the port end of the pressurized bottle is locked to the retaining ring, the urge pin will be inserted in the gas discharge valve device to activate the gas discharge valve device to discharge the hydrogen.

9. The supply device according to Claim 1, wherein the outer compartment receives hot water to enable endothermic reaction of the metal hydride within the hydrogen source, so as to effectively discharge the hydrogen at a fixed pressure.

10. The supply device according to Claim 9, wherein the hot water maintains the pressurized bottle at a pre-determined temperature, subjecting the pressurized bottle to discharge hydrogen within a range of 50 to 300 psi.

11. An enhanced heat conductive device for of a supply device for use with a hydrogen source of Claim 1, the enhanced heat conductive device including:
an expandable metal shell having a center and an inner diameter and being configured to a columnar configuration, wherein the inner diameter is slightly smaller than the outer diameter of the pressurized bottle;
at least one expandable rib, longitudinally extended along and integrally formed with the metal shell;
whereby when the pressurized bottle is inserted through the inner compartment, the pressurized bottle forces the metal shell to expand such that the metal shell is in close contact with the pressurized bottle.

12. The enhanced heat conductive device according to Claim 11, wherein the at least one expandable rib protrudes from the metal shell in a radial direction away from the center, and includes a pair of symmetrical rib surfaces.

13. The enhanced heat conductive device according to Claim 11, wherein the expandable metal shell is made of copper.

14. The enhanced heat conductive device according to Claim 11, wherein the expandable metal shell is made of stainless steel.
